# EUROPEAN PATENT APPLICATION

(11) **EP 3 287 376 A1**
(43) Date of publication of application: **28.02.2018**
(21) Application number: 17187481.1
(22) Date of filing: 23.08.2017
(51) Int. Cl.: B65B 69/00, B65B 1/20, B65D 88/16, B65D 90/20

(54) **BULK HANDLING**

(30) Priority: 25.08.2016 GB 201614504
(71) Applicant: Process Link Limited, Shipston on Stour, Warwickshire CV36 4QZ (GB)
(72) Inventor: SNAPE, George, Shipston on Stour, Warwickshire CV36 4QZ (GB)
(74) Representative: McWilliams, David John

(57) **Abstract**

A method of bulk handling including providing a sealed and partially full bulk container (12), suspending the bulk container (12) within a frame (14) and rotating the frame (14) about an axis in order to rotate the bulk container (12) through multiple revolutions of 360 degrees. During rotation of the frame (14) an uppermost end of the frame (14) or bulk container (12) becomes lowermost after a first 180 degrees of rotation and is returned to an uppermost position after a further 180 degrees of rotation. It is further defined a bulk handling system (10) for rotating a bulk container (12), the bulk handling system (10) comprising:
a rotation device (50) for rotating the frame (14)
the frame (14) secured to the rotation device (50) and
the bulk container (12) suspended within the frame (14),
wherein the rotation device (50) is configured to rotate the frame (14) about a generally horizontal axis relative to a longitudinal axis of the frame (14) such that for each revolution of the frame (14) through 360 degrees, an uppermost end of the bulk container (12) becomes lowermost after a first 180 degrees of rotation and is returned to an uppermost position after a further 180 degrees of rotation, said axis preferably extending along a generally central transverse axis of the bulk container (12) when the bulk container (12) is suspended within the frame (14) and the frame (14) is at rest.

## Description

The present invention relates to bulk handling, e.g. for the purpose of bulk storage of materials or discharge of materials from bulk storage. More particularly, but not exclusively, the invention relates to flexible intermediate bulk containers and/or methods and systems for handling flexible intermediate bulk containers.

A flexible intermediate bulk container (FIBC), sometimes called a "big bag" or "bulk bag", is a known term of art for a flexible container of the kind commonly used for transporting bulk quantities of loose, powdered or granular product, such as plastics, minerals, chemicals and agricultural products. Various systems are known for storing and discharging product from an FIBC. It is an object of the invention to provide an improved container, and/or system, and/or method for use in bulk handling applications.

According to a first aspect of the invention, there is provided a method of bulk handling the method comprising the steps of: providing a sealed and partially full bulk container having walls of flexible construction; suspending the bulk container within a frame; and rotating the frame about an axis in order to rotate the bulk container through multiple revolutions of 360 degrees, during which an uppermost end of the frame or bulk container becomes lowermost after a first 180 degrees of rotation and is returned to an uppermost position after a further 180 degrees of rotation.

The bulk container may be an FIBC.

Upper and lower ends of the bulk container may be arranged in free space, when the bulk container is suspended on the frame and with the frame at rest. That is, the upper and lower ends of the bulk container may be spaced from the ends of the frame.

The bulk container may be at least generally equidistantly spaced from upper and lower ends of the frame, when suspended on the frame and with the frame at rest. The bulk container may be arranged to be capable of swinging movement within the frame, when the bulk container is suspended within the frame and the frame is at rest.

The bulk container may include multiple suspension members associated with each of the upper and lower ends of the bulk container, for suspending the bulk container on the frame.

The suspension members may be in the form of loops or straps of flexible material extending from a respective end of the bulk container.

The frame may include multiple hangers, or other form of anchor points, associated with each of the upper and lower ends of the frame, for suspending the bulk container on the frame.

The frame may take the form of first and second parts, mountable one on top of the other, so as to define a cage within which the bulk container is suspended prior to rotation thereof.

Each frame part may have multiple parallel legs, defining corners of the cage.

The bulk container may be spaced from the legs of the frame, when suspended on the frame and with the frame at rest.

The frame may include barriers on opposing sides of the frame, extending between respective pairs of the legs of the frame.

The side barriers may be provided on opposing sides of the frame at a location to coincide generally with at least a portion of a middle third of the height of the bulk container in its suspended state within the frame and with the frame at rest.

Each side barrier may comprise a first strut and a second strut arranged in a spaced apart array.

The frame may be removably mounted within a rotation device configured for rotating the frame through said multiple revolutions.

The rotation device may be configured to rotate the frame about a generally horizontal axis relative to a longitudinal axis of the frame. The axis may extend along a generally central transverse axis of the bulk container when the bulk container is suspended within the frame and the frame is at rest.

According to a second aspect of the inveiton, there is provided a bulk container for use in the method of the first aspect of the invetion.

According to a third aspect of the invention, there is prov ided a bulk handling system for rotating a bulk container, the bulk handling system comprising: a rotation device for rotating a frame; a frame secured to the rotation device; and a bulk container suspended within the frame; wherein the rotation device is configured to rotate the frame about a generally horizontal axis relative to a longitudinal axis of the frame such that for each revolution of the frame through 360 degrees, an uppermost end of the bulk container becomes lowermost after a first 180 degrees of rotation and is returned to an uppermost position after a further 180 degrees of rotation, said axis preferably extending along a generally central transverse axis of the bulk container when the bulk container is suspended within the frame and the frame is at rest.

The container may define first and second ends and having a inlet/outlet passage located centrally at at least one of said first and second ends.

The container may further include multiple suspension members provided at each of said first and second ends.

The container may be mounted to the frame via the multiple suspension members such that the bulk container is capable of swinging movement within the frame.

The bulk container may comprise an inlet/outlet passage located substantially centrally each of the first and second ends.

According to a further aspect of the invention, there is provided a bulk handling system for use in the method of claim 1, comprising a frame and a bulk container, wherein the frame and bulk container are configured so that the bulk container can be suspended within the frame.

The bulk handling system may be configured so that the bulk container is capable of swinging movement within the frame, when the bulk container is suspended within the frame and the frame is at rest.

According to a further aspect of the invention, there is provided a bulk handling system comprising a frame and a bulk container, wherein the frame and bulk container are configured so that the bulk container can be suspended within the frame; the system further comprising a rotation device for rotating the frame with the bulk container suspended therein, configured such that for each revolution of the frame through 360 degrees, an uppermost end of the bulk container becomes lowermost after a first 180 degrees of rotation and is returned to an uppermost position after a further 180 degrees of rotation.

According to a further aspect of the inveiton, there is provided a flexible intermediate bulk container comprising a body of flexible material, said body defining first and second ends, and having a inlet/outlet passage located centrally at at least one of said first and second ends, wherein the container further includes multiple suspension members provided at each of said first and second ends.

The suspension members may be in the form of loops or straps of flexible material extending from a respective end of the container.

Each of the first and second ends may be generally square or rectangular in plan view, defining four corner regions. At least one suspension member may be provided at each one of said corners at each of said first and second ends.

Other aspects and features of the invention will be apparent from the claims and following description, made by way of example only, with reference to the accompanying drawings, in which:
Figure 1 is a schematic side view of a first bulk handling system;
Figure 2 is a schematic side view of a second bulk handling system;
Figure 3 is a schematic side view of a third bulk handling system; and
Figures 4 to 11 are schematic side views illustrating a preferred method of operating bulk handling systems of the kind shown in Figures 1 to 3.

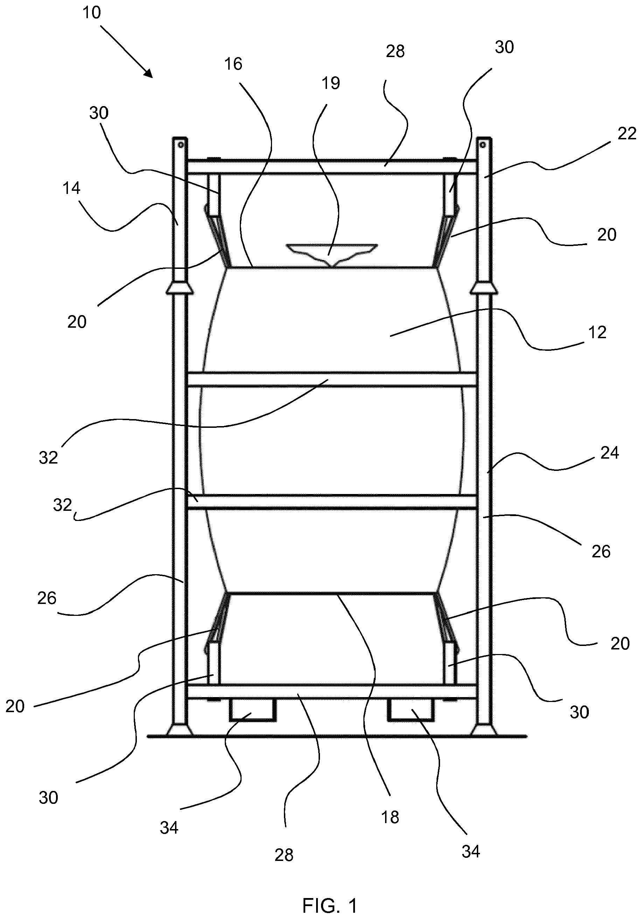

Referring firstly to Figure 1, a bulk handling system is indicated generally at 10, in the form of a bulk container 12 suspended within a frame 14.

In this embodiment, the bulk container 12 is a flexible intermediate bulk container (FIBC). The FIBC 12 is similar to those known in the art. The FIBC 12 The FIBC 12 defines first and second ends 16, 18. In this embodiment, the FIBC 12 has a single inlet/outlet passage 19 located centrally at one end 16 of the FIBC 12 (shown at the upper end 16 of the FIBC in the arrangement of Figure 1).

The FIBC 12 is generally rectangular in construction and defines walls of flexible material. However, the FIBC 12 has been modifed to include multiple suspension members 20 asociated with each of said first and second ends 16,18. In this embodiment, the suspension members 20 are in the form of loops or straps of flexible material extending from a respective end 16, 18 of the FIBC 12.

The FIBC defines a generally square or rectangular footprint in plan view, when suspended within the frame 14, with at least one suspension member 20 provided in association with a respective one of the four corners at each end 16, 18 of the FIBC 12 (with only two visible at each end in Figure 1).

In this embodiment, the frame 14 takes the form of first and second parts 22, 24, mounted one on top of the other, so as to define a generally square or rectangular cage, within which the FIBC 12 is suspended. Each frame part 22, 24 has four parallel legs 26, defining corners of the respective square or rectangle. A plate or struts 28 extends between respective pairs of the legs 26, in a direction orthogonal to the orientation of the legs 26, in order to define a rigid and interconnected frame 14.

Each frame part 22, 24 includes multiple hangers 30 for use in suspending the FIBC 12 within the frame 14. In this embodiment, each frame part 22, 24 has at least four hangers, arranged at or adjacent suitable corner regions of the frame part 22, 24, for cooperation with the suspension members 20 on the FIBC 12. In particular, this embodiment includes hangers 30 in the form of bars or hooks extending into the cage from the upper and lower ends of the frame 14, and onto which the suspension members 20 can be attached; that is to say, at least four hangers 30 per frame part 22, 24, with one of said hangers 30 associated with each corner of the cage. In other embodiments, each frame part 22, 24 includes multiple anchor points, each anchor point arranged for cooperation with a respective suspension member 20 of the FIBC 12. Each anchor points may take the form of a bolt or rigid loop, for example, for use in securing the respective suspension member 20 at or adjacent a respective corner of the cage.

As can be seen, when the FIBC 12 is suspended within the frame 14, the upper and lower ends 16, 18 of the FIBC 12 are in free space; that is to say, the ends 16, 18 are spaced from, and not seated on, the frame 14. In exemplary embodiments, the FIBC 12 is also spaced from the legs 26 of the frame 14.

The suspended FIBC 12 is not seated on the frame 14 and so is capable of swinging from side-to-side within the cage defined by the frame 14. In exemplary embodiments, the ends 16, 18 of the FIBC 12 are at least generally equidistantly spaced from the upper and lower ends of the frame 14.

The frame 14 includes multiple side struts 32 extending between respective pairs of the legs 26, e.g. with at least two side struts 32 provided per side of the frame 14. As well as providing additional rigidity to the frame 14, the side struts 32 serve to limit the degree of lateral swinging of the FIBC 12 within the cage. In exemplary embodiments, the struts 32 are provided at a location to coincide at least generally with a middle third of the height of the FIBC 12 in its suspended state within the frame 14. In the illustrated embodiment, each side of the frame 14 includes two side struts 32, with a first strut 32 arranged at a location coinciding with the height of a first third of the FIBC 12, and with a second the strut 32 arranged at a location coinciding with the height of a second third of the FIBC 12.

In exemplary embodiments, each pair of side struts 32 are arranged with the respective two struts in a spaced apart array, e.g. with each of said two struts 32 located on opposing sides of the halfway height of the FIBC 12 in its suspended state on the frame (e.g. when the ends 16, 18 of the FIBC 12 are each at least generally equidistantly spaced from the adjacent end of the frame 14).

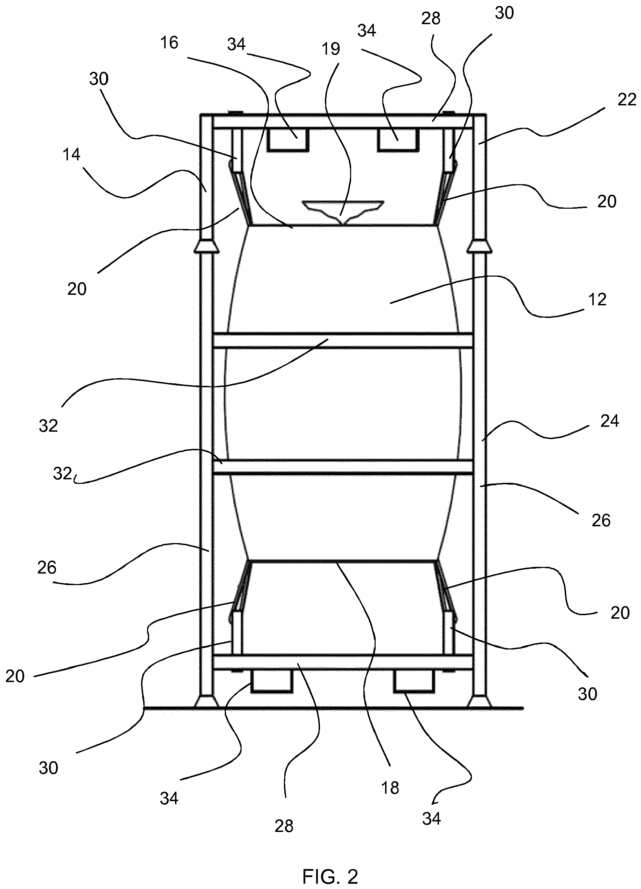

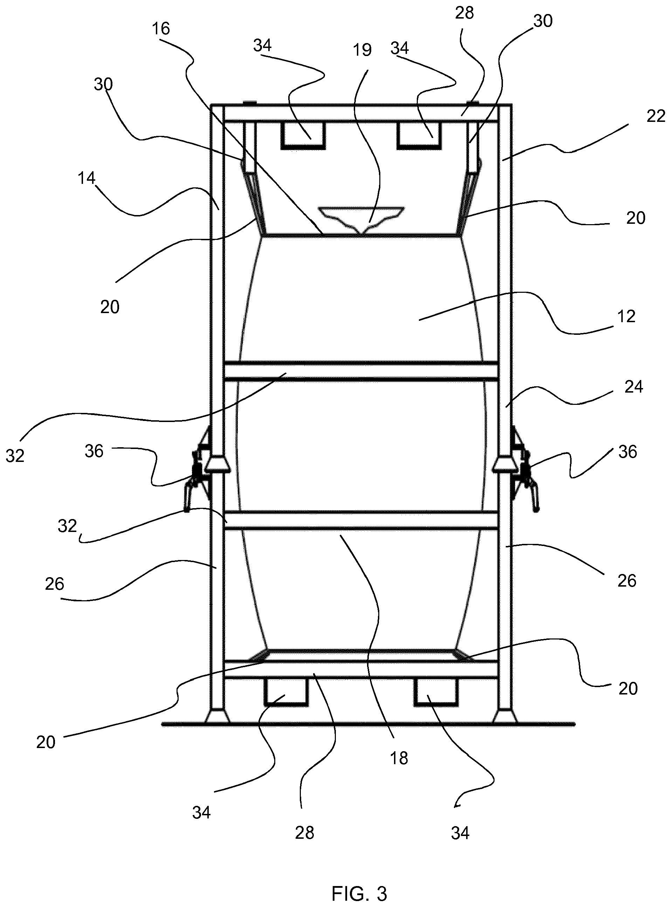

The lower and upper parts 16, 18 of the frame 14 may each include pairs of fork lift guide channels 34, for use in lifting a respective part of the frame 14. Figure 1 shows only the lower part 16 with said channel 34, whereas Figures 2 and 3 show both parts 16, 18 provided with said channels 34. In each case, the channels 34 are provided on the interconnecting plates/struts of the frame 14. The system 10 of Figure 3 includes clamps 36, for clamping the first and second parts 16, 18 of the frame 14 together, in order to prevent relative movement between the first and second parts 16, 18. For embodiments of the type shown in Figures 1 and 2, alternative means of holding the first and second parts together (to prevent relative movement therebetween) will be necessary.

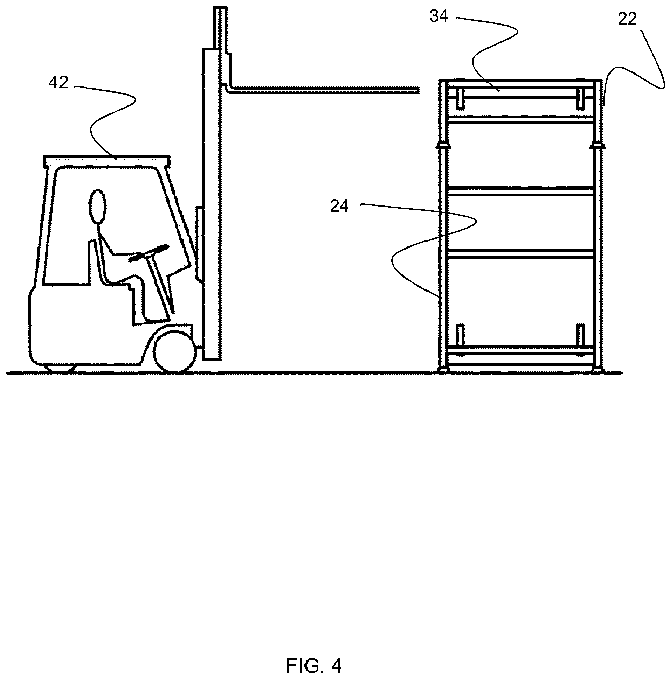

An example method of operating bulk handling systems of the kind shown in Figures 1 to 3 will now be described with reference to Figures 4 to 11.

Figure 4 shows the frame 14 mounted on a floor 40, such that the legs 26 are generally vertical with respect to the floor 40, and with the frame parts 22, 24 arranged one on top of the other, without the FIBC 12 in position.

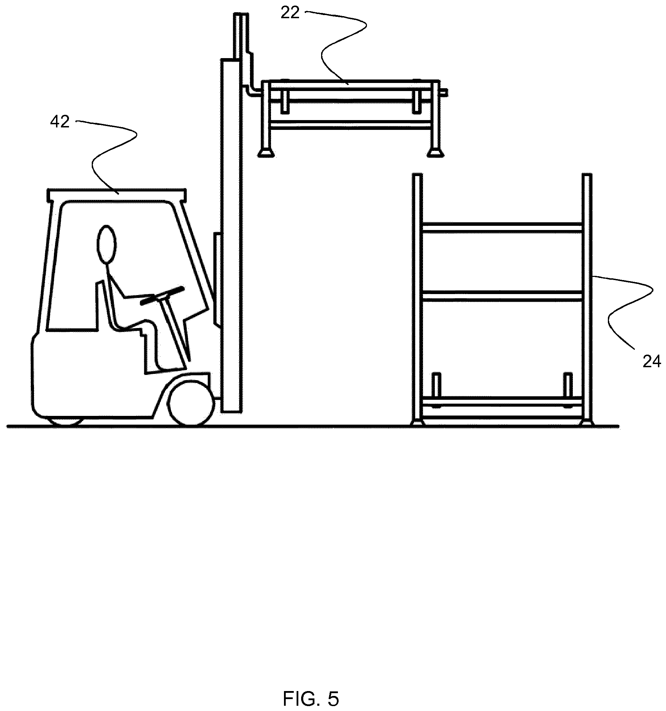

A fork lift truck 42 is used to lift and separate the upper part 22 from the lower part 24, e.g. using the channels 34, as can be seen in Figure 5.

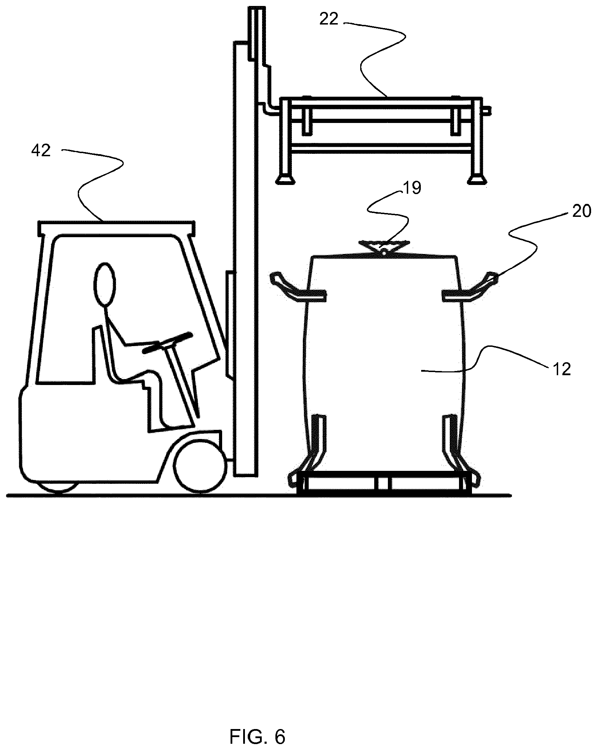

The upper part 22 is then moved and arranged above a partially full FIBC 14, e.g. as shown in Figure 6. The term 'partially full' is intended to mean that the FIBC 12 will have at least some free capacity, when the FIBC 12 is suspended on the frame 14. Typically, this might involve the FIBC being less than 90% full, for example in the region of two thirds full. The discharge end of the FIBC 12 is tied shut or otherwise sealed against undesired product egress. The term 'sealed' does not necessarily mean that product egress is 100% prevented. That will depend on the type of product and the type of closure for the inlet/outlet passage 19. However, it will be uinderstood that the method of the invention is intended to operate without significant product egress from the container.

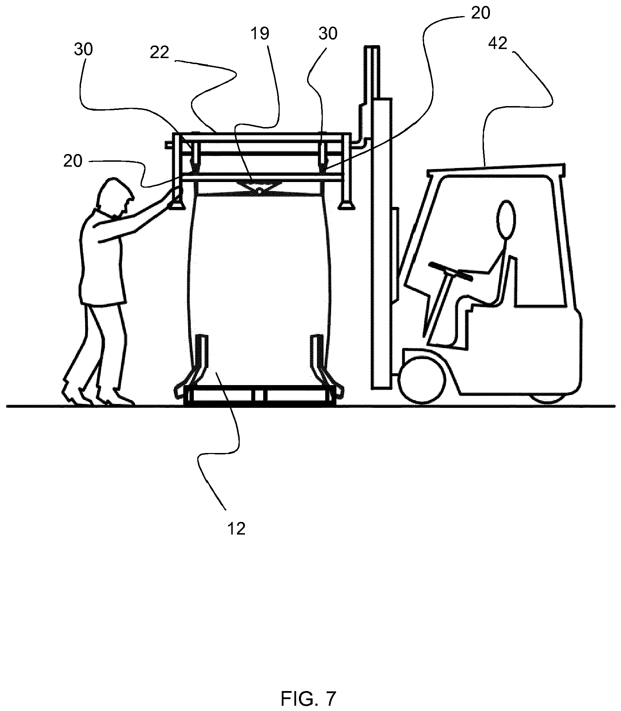

Figure 7 shows the FIBC 12 coupled with the upper part 22, via the upper suspension members 20 and hangers 30.

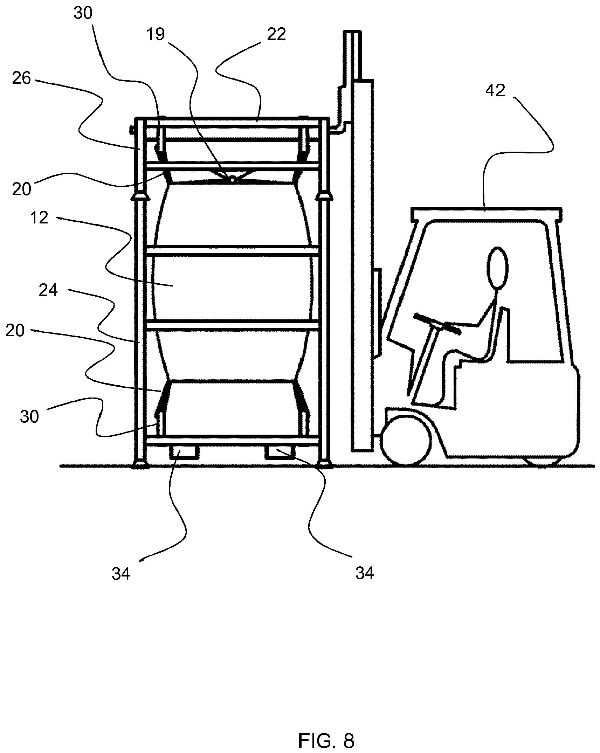

The upper part 22 can then be used to carry the FIBC 12, whereupon the upper part 22 can be re-mounted on the lower part 24 (e.g. with the legs 26 of the upper and lower parts 22, 24 in alignment). The FIBC 12 is then coupled with the lower part 24, via the lower suspension members 20 and hangers 30, e.g. as can be seen in Figure 8.

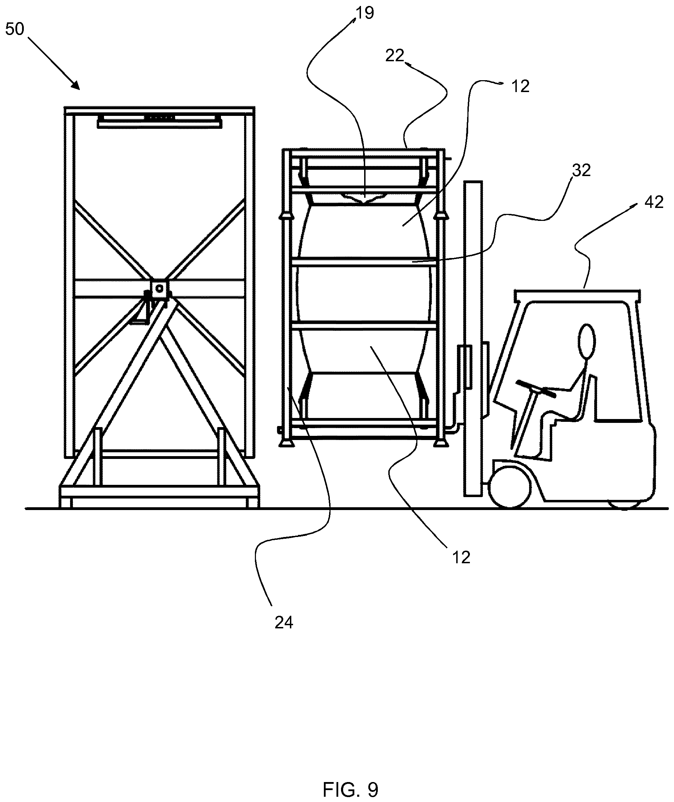

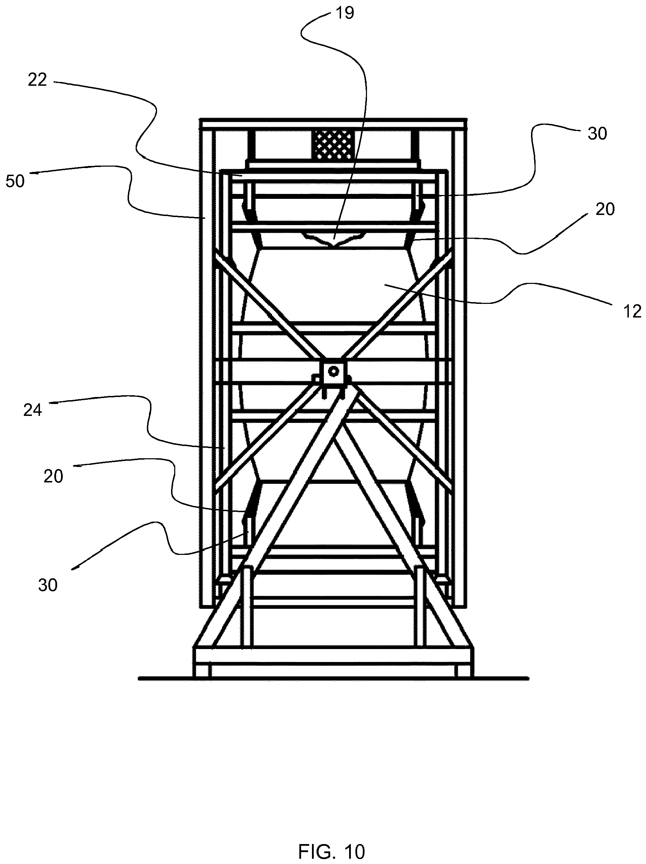

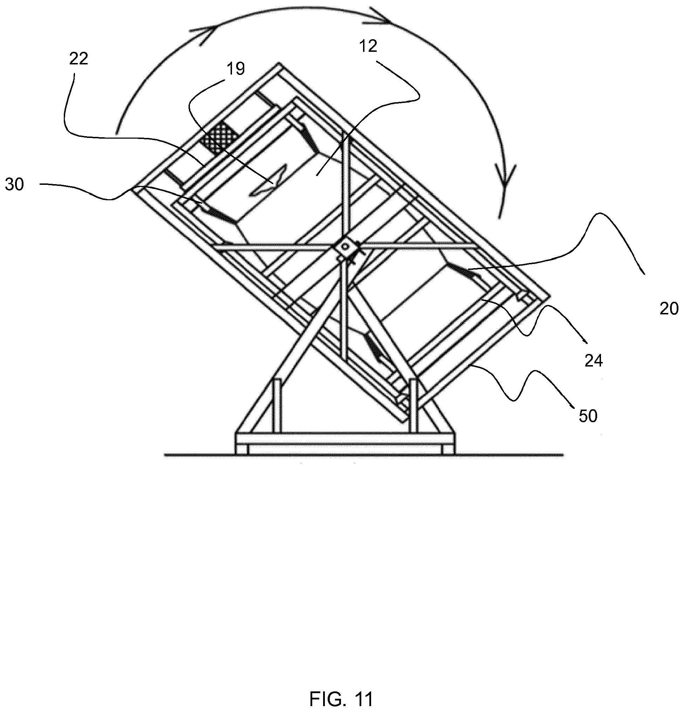

Figure 9 and 10 show the system 10 being loaded into a rotation device 50 configured to define an enclosure for receiving the frame 14, and securing the frame 14 in place, in order to prevent relative movement between the upper and lower parts 22, 24. The rotation device 50 is further configured to spin the frame 14 through multiple rotations, e.g. as indicated in Figure 11. Specifically, the rotation device is configured to rotate about a generally horizontal axis relative to the longitudinal axis of the frame (that is to say, about an axis orthogonal to the orientation of the legs 26 of the frame 14, when the frame 14 is received in the enclosure of the rotation device 50). The rotation device is configured so that the axis of rotation extends along a generally central transverse axis of the FIBC 12 (e.g. at or approximately half the height of the suspended FIBC 12).

The effect of the rotation of the frame 14 is to rotate the partially full FIBC 12. This results in swinging of the FIBC 12 and a tumbling or throwing displacement of material within the FIBC 12. Advantageously, this displacement can be used to break up consolidation of material within the FIBC 12.

Moreover, with sufficient spare capacity within the bulk container 12 (e.g. at or greater than around 10% spare volume within the suspended FIBC 12), and/or with rotation through a suitable number of revolutions of 360 degrees (i.e. during which an uppermost end of the bulk container becomes lowermost after a first 180 degrees of rotation and is returned to an uppermost position after a further 180 degrees of rotation), e.g. greater than 10 revolutions, it has been found to be possible to blend materials within the bulk container 12 (e.g. if the FIBC 12 has been filled with successive layers of different materials prior to lifting into the frame 14).

Although the side struts 32 limit the degree of swing that can be achieved, they in fact provide a reaction surface against which the FIBC 12 will strike during rotation, causing increased displacement and blending of the material within the FIBC 12 during rotation thereof. This can be particularly advantageous for breaking up product which has become consolidated during storage.

The FIBC 12 can then be removed from the rotation device 50 and frame 14, whereupon it may be desirable to begin discharge of material from the FIBC 12 or to return the FIBC 12 to storage, for example.

Although exemplary embodiments of the invention have been described with reference to side struts 32, it will be understood that other forms of reaction barrier may be utilised, such as a plate extending across a respective side of the frame, for the purpose of limiting swinging movement of the bulk container, and into which the bulk container is intended to strike during rotation of the frame. Although such barriers may be provided to extend the full height of each respective side of the frame, it has been found that effective blending can be achieved if the barriers are located to extend across a middle section of the height of each respective side of the frame 14, e.g. between in the region of 20-80% of the height of the frame 14, or between in the region of 25%-75% of the height of the frame 14, or between in the region of 30%-70% of the height of the frame 14.

Although exemplary embodiments of the invention have been described with reference to a forklift truck for lifting and transporting the frame, other methods may be preferred, e.g. using a crane or hoist to manoeuvre the frame.

Although exemplary embodiments of the invention have been described with reference to a bulk container in the form of an FIBC, other flexible bulk containers may be used, provided rovided that they are capable of withstanding the stresses and strains associated with being suspended within a frame in a partially full state, and capable of withstanding the stresses and strains associated with the rotation and striking of the sides of the frame.

Although the illustrated embodiment shows a flexible container having a single inlet/outlet passage 19, the opposing ends 16, 18 of the container may each be provied with an inlet/outlet passage 19 (e.g. with an inlet/outlet passage 19 at each of the upper and lower ends, for the arrnagement of Figure 1). Typically, each inlet/outlet passage will be centrally arranged with resepct to a longitudinal axius of the container (i.e. an axis extending between the upper and lower ends of the container).

## Claims

1. A method of bulk handling comprising the steps of:
providing a sealed and partially full bulk container having walls of flexible construction;
suspending the bulk container within a frame; and
rotating the frame about an axis in order to rotate the bulk container through multiple revolutions of 360 degrees, during which an uppermost end of the frame or bulk container becomes lowermost after a first 180 degrees of rotation and is returned to an uppermost position after a further 180 degrees of rotation.

2. A method according to claim 1, wherein upper and lower ends of the bulk container are arranged in free space, when the bulk container is suspended on the frame and with the frame at rest.

3. A method according to claim 1 or claim 2, wherein the bulk container is arranged to be capable of swinging movement within the frame, when the bulk container is suspended within the frame and the frame is at rest.

4. A method according to any preceding claim, wherein the bulk container includes multiple suspension members associated with each of the upper and lower ends of the bulk container, for suspending the bulk container on the frame.

5. A method according to claim 4, wherein the suspension members are in the form of loops or straps of flexible material extending from a respective end of the bulk container.

6. A method according to any preceding claim, wherein the frame takes the form of first and second parts, mountable one on top of the other, so as to define a cage within which the bulk container is suspended prior to rotation thereof, wherein each frame part has multiple parallel legs, defining corners of the cage.

7. A method according to claim 6, wherein the bulk container is spaced from the legs of the frame, when suspended on the frame and with the frame at rest.

8. A method according to claim 6 or claim 7, wherein the frame includes barriers on opposing sides of the frame, extending between respective pairs of the legs of the frame.

9. A method according to claim 8, wherein the side barriers are provided on opposing sides of the frame at a location to coincide generally with at least a portion of a middle third of the height of the bulk container in its suspended state within the frame and with the frame at rest.

10. A method according to claim 9, wherein each side barrier comprise a first strut and a second strut arranged in a spaced apart array.

11. A method according to any preceding claim, wherein the frame is removably mounted within a rotation device configured for rotating the frame through said multiple revolutions.

12. A method according to claim 11, wherein the rotation device is configured to rotate the frame about a generally horizontal axis relative to a longitudinal axis of the frame, said axis preferably extending along a generally central transverse axis of the bulk container when the bulk container is suspended within the frame and the frame is at rest.

13. A bulk handling system for rotating a bulk container, the bulk handling system comprising:
a rotation device for rotating a frame;
a frame secured to the rotation device; and
a bulk container suspended within the frame;
wherein the rotation device is configured to rotate the frame about a generally horizontal axis relative to a longitudinal axis of the frame such that for each revolution of the frame through 360 degrees, an uppermost end of the bulk container becomes lowermost after a first 180 degrees of rotation and is returned to an uppermost position after a further 180 degrees of rotation, said axis preferably extending along a generally central transverse axis of the bulk container when the bulk container is suspended within the frame and the frame is at rest.

14. A bulk handling system according to claim 13, wherein the container defines first and second ends and having a inlet/outlet passage located centrally at at least one of said first and second ends, wherein the container further includes multiple suspension members provided at each of said first and second ends, and wherein the container is mounted to the frame via the multiple suspension members such that the bulk container is capable of swinging movement within the frame.

15. A bulk handling system according to claim 13 or 14, wherein the bulk container comprises an inlet/outlet passage located substantially centrally each of the first and second ends.
